# EUROPEAN PATENT APPLICATION

(11) **EP 4 729 881 A1**
(43) Date of publication of application: **22.04.2026**
(21) Application number: 24839945.3
(22) Date of filing: 26.06.2024
(51) Int. Cl.: G01B 11/06, G06T 7/50

(54) **APPARATUS AND METHOD FOR INSPECTING COATING THICKNESS AND RECORDING MEDIUM STORING COMMAND**

(30) Priority: 07.07.2023 KR 20230088165
(71) Applicant: Koh Young Technology Inc., Seoul 08588 (KR)
(72) Inventor: HONG, Deok Hwa, Gwangmyeong-si Gyeonggi-do 14242 (KR); HONG, Young Joo, Gwangmyeong-si Gyeonggi-do 14255 (KR)
(74) Representative: Meissner Bolte Partnerschaft mbB
(86) International application number: PCT/KR2024/008819
(87) International publication number: WO 2025/014131

(57) **Abstract**

An apparatus according to an aspect of the present disclosure may comprise: an ultraviolet light source; an image sensor; an optical coherence tomography module; a memory storing one or more correlation models; and a processor. The processor may: control the ultraviolet light source to irradiate, with ultraviolet rays, an object to which a coating including a fluorescent material is applied; control the image sensor to obtain a fluorescent image of the object with which the ultraviolet rays are irradiated; determine, on the basis of the fluorescent image, fluorescence brightness of one or more sampling points included in the object; control the optical coherence tomography module to obtain coating thickness measured via optical coherence tomography at the one or more sampling points; train the one or more correlation models on the basis of first learning data including the fluorescence brightness of the one or more sampling points and the coating thickness measured at the one or more sampling points; determine, on the basis of the fluorescent image, a fluorescence brightness of a target area of the object; and determine, on the basis of the fluorescence brightness of the target area and the one or more correlation models, a coating thickness of the target area.

## Description

### TECHNICAL FIELD

The present disclosure relates to a technique for inspecting a coating thickness.

### BACKGROUND ART

During or after the process of coating an object (e.g., a coated substrate), the coating thickness of the object may be inspected to assess the quality of the coating. Optical coherence tomography (OCT) may be used to quantitatively measure the coating thickness, but this method requires scan time proportional to the inspection area. In addition, although the presence or absence of a coating on the object may be inspected based on the fluorescence brightness of the coated object irradiated with ultraviolet rays, it may be difficult to accurately inspect the coating thickness of the object using only the fluorescence brightness.

### DISCLOSURE

### TECHNICAL PROBLEM

The present disclosure provides a technique for inspecting a coating thickness.

### TECHNICAL SOLUTION

According to an embodiment of the present disclosure, an apparatus may comprise: an ultraviolet light source; an image sensor; an optical coherence tomography (OCT) module; one or more memories configured to store one or more correlation models, the one or more correlation models outputting a coating thickness based on an input fluorescence brightness; and one or more processors communicatively connected to the ultraviolet light source, the image sensor, the optical coherence tomography module, and the one or more memories, wherein the one or more processors are configured to: control the ultraviolet light source to irradiate an object, which is coated with a coating comprising a fluorescent material, with ultraviolet rays; control the image sensor to obtain a fluorescent image of the object irradiated with the ultraviolet rays; determine fluorescence brightnesses of one or more sampling points included in the object on the basis of the fluorescent image; control the optical coherence tomography module to obtain coating thicknesses measured through optical coherence tomography at the one or more sampling points; train the one or more correlation models on the basis of first learning data comprising the fluorescence brightnesses of the one or more sampling points and the coating thicknesses measured at the one or more sampling points; determine a fluorescence brightness of a target area of the object on the basis of the fluorescent image; and determine a coating thickness of the target area on the basis of the fluorescence brightness of the target area and the one or more correlation models.

In an embodiment, the one or more processors may be configured to determine the one or more sampling points on the basis of a fluorescence brightness of the obtained fluorescent image.

In an embodiment, the one or more processors may be configured to determine the one or more sampling points on the basis of deviation between the fluorescence brightnesses included in the first learning data.

In an embodiment, the one or more processors may be configured to: determine an accuracy of the one or more trained correlation models in determining the coating thickness; obtain, based on the accuracy, second learning data comprising fluorescence brightnesses of additional sampling points included in the object and coating thicknesses measured at the additional sampling points; and further train the one or more correlation models on the basis of the second learning data.

In an embodiment, the one or more processors may be configured to: determine fluorescence brightnesses of one or more evaluation points included in the object on the basis of the fluorescent image of the object; determine coating thicknesses of the one or more evaluation points on the basis of the fluorescence brightnesses of the one or more evaluation points and the one or more correlation models; obtain coating thicknesses measured at the one or more evaluation points; and determine the accuracy of the one or more trained correlation models in determining the coating thicknesses by comparing the coating thicknesses of the one or more evaluation points determined on the basis of the one or more correlation models with the coating thicknesses measured at the one or more evaluation points.

In an embodiment, the apparatus may further comprise a visible light source, and the one or more processors may be configured to: control the visible light source to irradiate the object with visible light; control the image sensor to obtain a color image of the object captured under visible light; divide the object into a plurality of background areas on the basis of the color image of the object; and train a correlation model corresponding to a specific background area among the plurality of background areas on the basis of the first learning data, and wherein the specific background area comprises the target area.

In an embodiment, the one or more processors may be configured to determine the coating thickness of the target area on the basis of the fluorescence brightness of the target area and the correlation model corresponding to the specific background area.

In an embodiment, the one or more processors may be configured to determine one or more sampling points included in an edge area of the specific background area, and the edge area may be an area where a distance from a boundary between the specific background area and another background area among the plurality of background areas is less than a predetermined threshold.

In an embodiment, the apparatus may further comprise a visible light source, and the one or more processors may be configured to: control the visible light source to irradiate the object with visible light; control the image sensor to obtain a color image of the object captured under visible light; divide the object into a plurality of background areas on the basis of the color image of the object; and compensate for the fluorescence brightnesses of the one or more sampling points on the basis of a specific background area among the plurality of background areas corresponding to the one or more sampling points, and the first learning data may comprise the compensated fluorescence brightnesses of the one or more sampling points.

In an embodiment, the one or more processors may be configured to: compensate for the fluorescence brightness of the target area on the basis of a specific background area among the plurality of background areas corresponding to the target area; and determine the coating thickness of the target area on the basis of the compensated fluorescence brightness of the target area and the one or more correlation models.

In an embodiment, the one or more processors may be configured to: separate the fluorescent image into an image set comprising a blue light image corresponding to a blue light band, a green light image corresponding to a green light band, and a red light image corresponding to a red light band; and determine the fluorescence brightnesses of the one or more sampling points included in the object on the basis of the image set and a responsivity of each image included in the image set to a specific wavelength.

In an embodiment, the one or more processors may be configured to determine the fluorescence brightnesses of the one or more sampling points included in the object on the basis of an image with a highest responsivity to a specific wavelength among images whose fluorescence brightnesses are not saturated in the image set.

According to an embodiment of the present disclosure, a method performed by an apparatus may comprise: irradiating, by an ultraviolet light source, an object coated with a coating comprising a fluorescent material with ultraviolet rays; obtaining, by an image sensor, a fluorescent image of the object irradiated with the ultraviolet rays; determining, by one or more processors, fluorescence brightnesses of one or more sampling points included in the object on the basis of the fluorescent image of the object; obtaining, by an optical coherence tomography module, coating thicknesses measured through optical coherence tomography at the one or more sampling points included in the object; training, by the one or more processors, one or more correlation models on the basis of first learning data comprising the fluorescence brightnesses of the one or more sampling points and the coating thicknesses measured at the one or more sampling points, the one or more correlation models outputting a coating thickness based on an input fluorescence brightness; determining, by the one or more processors, a fluorescence brightness of a target area of the object on the basis of the fluorescent image; and determining, by the one or more processors, a coating thickness of the target area on the basis of the fluorescence brightness of the target area and the one or more correlation models.

In an embodiment, the method may further comprise determining, by the one or more processors, the one or more sampling points on the basis of a fluorescence brightness of the obtained fluorescent image.

In an embodiment, the determining, by the one or more processors, the one or more sampling points on the basis of the fluorescence brightness in some points of the obtained fluorescent image may comprise determining, by the one or more processors, the one or more sampling points on the basis of deviation between the fluorescence brightnesses included in the first learning data.

In an embodiment, the method may further comprise: determining, by the one or more processors, an accuracy of the one or more trained correlation models in determining the coating thickness; obtaining, by the one or more processors, based on the accuracy, second learning data comprising fluorescence brightnesses of additional sampling points included in the object and coating thicknesses measured at the additional sampling points; and further training, by the one or more processors, the one or more correlation models on the basis of the second learning data.

In an embodiment, the method may further comprise: irradiating, by a visible light source, the object with visible light; and obtaining, by the image sensor, a color image of the object captured under visible light, wherein the training, by the one or more processors, the one or more correlation models on the basis of the first learning data comprises: dividing, by the one or more processors, the object into a plurality of background areas on the basis of the color image of the object; and training, by the one or more processors, a correlation model corresponding to a specific background area among the plurality of background areas on the basis of the first learning data, and wherein the specific background area comprises the target area.

In an embodiment, the determining, by the one or more processors, the coating thickness of the target area on the basis of the fluorescence brightness of the target area and the one or more correlation models may comprise determining, by the one or more processors, the coating thickness of the target area on the basis of the fluorescence brightness of the target area and a correlation model corresponding to the specific background area.

In an embodiment, the method may further comprise separating, by the one or more processors, the fluorescent image into an image set comprising a blue light image corresponding to a blue light band, a green light image corresponding to a green light band, and a red light image corresponding to a red light band, wherein the determining, by the one or more processors, the fluorescence brightnesses of the one or more sampling points included in the object on the basis of the fluorescent image of the object may comprise determining, by the one or more processors, the fluorescence brightnesses of the one or more sampling points included in the object on the basis of the image set and a responsivity of each image included in the image set to a specific wavelength.

According to an embodiment of the present disclosure, a non-transitory computer-readable recording medium may have recorded thereon instructions that, when executed by one or more processors, cause the one or more processors to perform operations, wherein the instructions are configured to cause the one or more processors to: control an ultraviolet light source to irradiate an object, which is coated with a coating comprising a fluorescent material, with ultraviolet rays; control an image sensor to obtain a fluorescent image of the object irradiated with the ultraviolet rays; determine fluorescence brightnesses of one or more sampling points included in the object on the basis of the fluorescent image; control an optical coherence tomography module to obtain coating thicknesses measured through optical coherence tomography at the one or more sampling points; train one or more correlation models on the basis of first learning data comprising the fluorescence brightnesses of the one or more sampling points and the coating thicknesses measured at the one or more sampling points, the one or more correlation models outputting a coating thickness based on an input fluorescence brightness; determine a fluorescence brightness of a target area of the object on the basis of the fluorescent image; and determine a coating thickness of the target area on the basis of the fluorescence brightness of the target area and the one or more correlation models.

### ADVANTAGEOUS EFFECTS

According to an embodiment of the present disclosure, it is possible to accurately inspect the coating thickness in a short amount of time using the fluorescence brightness of a coated object.

According to an embodiment of the present disclosure, it is possible to train a correlation model that outputs a coating thickness, based on an input fluorescence brightness of a coated object with high accuracy.

According to an embodiment of the present disclosure, it is possible to inspect a coating thickness accurately for various portions of an object with different backgrounds by compensating for the background effect of an object that is reflected in the fluorescence brightness.

The effects of the technical concepts of the present disclosure are not limited to those mentioned above, and other effects not mentioned will be clearly understood by those skilled in the art from the description of the specification.

### DESCRIPTION OF DRAWINGS

FIG. 1 illustrates an environment where an apparatus according to an embodiment of the present disclosure may be used.
FIG. 2 is a block diagram of an apparatus according to an embodiment of the present disclosure.
FIG. 3 is a diagram illustrating an object and sampling points according to an embodiment of the present disclosure.
FIG. 4 is a diagram illustrating a correlation between fluorescence brightness of an object and coating thickness according to an embodiment of the present disclosure.
FIG. 5 is a flowchart illustrating a method according to an embodiment of the present disclosure.
FIG. 6 is a flowchart illustrating a step of determining a sampling point according to an embodiment of the present disclosure.
FIG. 7 is a diagram illustrating first learning data and second learning data according to an embodiment of the present disclosure.
FIG. 8 is a flowchart illustrating a step of obtaining second learning data according to an embodiment of the present disclosure.
FIG. 9 is a diagram illustrating a step of determining the accuracy of a correlation model in determining a coating thickness according to an embodiment of the present disclosure.
FIG. 10 is a diagram illustrating a plurality of background areas obtained by dividing an object according to an embodiment of the present disclosure.
FIG. 11 is a diagram illustrating an example of compensating for a fluorescence brightness according to background areas.
FIG. 12 is a diagram illustrating sampling points corresponding to a specific background area among a plurality of background areas according to an embodiment of the present disclosure.
FIG. 13 is a flowchart illustrating a step of training a correlation model corresponding to a specific background area among a plurality of background areas and determining a coating thickness of a target area on the basis of the correlation model corresponding to the specific background area among the plurality of background areas, according to an embodiment of the present disclosure.
FIG. 14 is a diagram illustrating red light images, green light images, and blue light images according to an embodiment of the present disclosure.
FIG. 15 is a flowchart illustrating a step of determining the fluorescence brightnesses of one or more sampling points included in an object, based on an image set and the response to a specific wavelength of each image included in the image set, according to an embodiment of the present disclosure.

### MODE FOR INVENTION

Various embodiments described herein are exemplified for the purpose of clearly explaining the technical idea of the present disclosure, and are not intended to limit the present disclosure to specific embodiments. The technical idea of the present disclosure includes various modifications, equivalents, and alternatives of each embodiment described herein, and embodiments selectively combined from all or a part of each embodiment. In addition, the scope of the technical idea of the present disclosure is not limited to various embodiments presented below or detailed description thereof.

All terms used herein, including technical or scientific terms, have meanings that are generally understood by those skilled in the art to which the present disclosure pertains, unless otherwise specified.

Expressions used herein, such as "include," "may include," "provided with," "may be provided with," "have," "may have," etc., imply that target features (e.g., a function, an operation, or an element) exist, and do not exclude the existence of other additional features. That is, such expressions should be understood as open-ended terms connoting the possibility of inclusion of other embodiments.

A singular expression used herein may include meanings of plurality, unless otherwise mentioned in the context, and this also applies to a singular expression recited in the claims.

The expressions "a first," "a second," "first," or "second" used herein are used to distinguish one object from another object in referring to a plurality of homogeneous objects, unless the context dictates otherwise, and do not limit the order or the importance between the objects.

Expressions such as "A, B, and C," "A, B, or C," "A, B, and/or C," "at least one of A, B, and C," "at least one of A, B, or C," and "at least one of A, B, and/or C," used herein may imply each listed item or all possible combinations of listed items. For example, "at least one of A or B" may refer to all of (1) at least one A, (2) at least one B, and (3) at least one A and at least one B.

The expression "based on" used herein is used to describe one or more factors that influence a decision, an action of judgment, or an operation described in a phrase or sentence including the relevant expression, and this expression does not exclude an additional factor influencing the decision, the action of judgment, or the operation.

Herein, when an element (e.g., a first element) is expressed as being "coupled" or "connected" to another element (a second element), the element may be coupled or connected directly to the other element, or may be coupled or connected to the other element via another new element (e.g., a third element).

The expression "configured to" used in the present disclosure may imply "designed to," "having the capacity to," "adapted to," "made to," "capable of," etc. according to the context. This expression is not limited to implying "specifically designed to" in hardware. For example, a processor configured to perform a specific operation may imply a special-purpose computer structured through programming to perform the specific operation.

Hereinafter, various embodiments of the present disclosure will be described with reference to the accompanying drawings. In the accompanying drawings and the description of the drawings, identical or substantially equivalent elements may be assigned with identical reference numerals. Furthermore, in the following description of various embodiments, redundant descriptions of the identical or relevant elements will be omitted. However, this does not imply that such elements are not included in the embodiments.

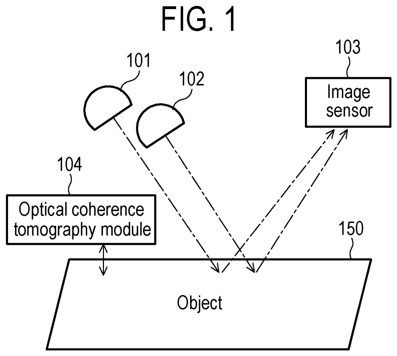

FIG. 1 illustrates an environment where an apparatus 100 according to an embodiment of the present disclosure may be used. An object 105 is a coated object, and may be, for example, a coated substrate. In the present disclosure, the substrate refers to a plate or container for mounting devices such as semiconductor chips, and refers to an object on which devices are capable of being mounted. The substrate may be used for manufacturing integrated circuits and may be made of materials such as silicon. For example, the substrate may be a printed circuit board (PCB), and may be referred to as a wafer or the like depending on the embodiment. Furthermore, the coating of the object 105 may be an invisible or low-visibility coating having a thickness that is difficult to visually determine. Furthermore, the object 105 may be pre-coated with a coating including a fluorescent material (pigment). In the case where a coating including a fluorescent material is applied to the object 105, when the object 105 is irradiated with ultraviolet rays, the object 105 coated with the coating including the fluorescent material may emit light (e.g., visible light) having a shorter wavelength than the incident ultraviolet rays. At this time, the thicker the coating thickness, the brighter the emitted light (i.e., the fluorescence brightness).

An ultraviolet light source 101 may irradiate the object 105 with ultraviolet rays. When the ultraviolet rays emitted from the ultraviolet light source 101 reach the object 105 having a coating including a fluorescent material, the coating on the object 105 may emit fluorescence, and the fluorescence emitted from the coating may be reflected toward an image sensor 103 depending on the background of the object 105. A visible light source 102 may irradiate the object 105 with visible light. The image sensor 103 may capture fluorescence emitted from the coating mixed with the fluorescent material, and fluorescence reflected by the background of the object 105. In other words, the image sensor 103 may capture an image (i.e., a fluorescent image) when the object 105 coated with a fluorescent material is irradiated with ultraviolet rays. Furthermore, the image sensor 103 may obtain a color image of the object 105 captured under visible light.

An optical coherence tomography module 104 may measure the coating thickness of the object 105 through optical coherence tomography. Specifically, the optical coherence tomography module 104 may measure the coating thickness of the object 105 through optical coherence tomography, independently of the operation of the ultraviolet light source 101 and the image sensor 103.

Additionally, the apparatus 100 may be configured to include one or more processors 107 for performing predetermined operations and/or one or more memories 106. In addition, the ultraviolet light source 101, the visible light source 102, the image sensor 103, and the optical coherence tomography module 104 may be connected to one or more memories 106 and one or more processors 107 of the apparatus 100, respectively, and may be controlled by various instructions.

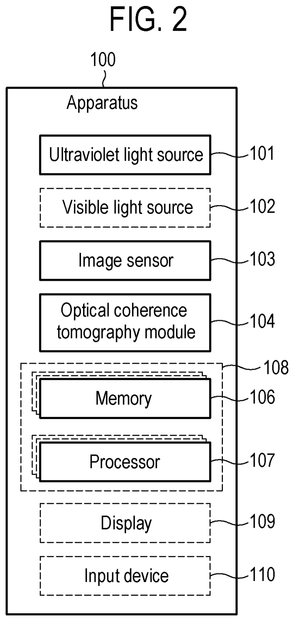

FIG. 2 is a block diagram of an apparatus according to an embodiment of the present disclosure. The apparatus 100 may include an ultraviolet light source 101, an image sensor 103, one or more memories 106, and/or one or more processors 107 as components. In some embodiments, at least one of the components of the apparatus 100 may be excluded, or other components may be added to the apparatus 100. In some embodiments, additionally or alternatively, some components may be implemented as an integrated form or as single or multiple entities. The apparatus 100 may be an inspection apparatus for inspecting the object 105. In an embodiment, the apparatus 100 may be an apparatus configured to perform a component mounting process and/or a coating process on a substrate, or may be an apparatus configured to inspect a substrate on which a component mounting process and/or a coating process has been performed in another apparatus.

The ultraviolet light source 101 may irradiate an object 105, having a coating mixed with a fluorescent material, with ultraviolet rays. The ultraviolet light source 101 may output ultraviolet rays based on instructions received from the processor 107. For example, the start, end, and intensity of the ultraviolet ray output of the ultraviolet light source 101 may be controlled by the processor 107. The visible light source 102 may irradiate the object 105, having a coating mixed with a fluorescent material, with visible light. The visible light source 102 may output visible light based on instructions received from the processor 107. For example, the start, end, and intensity of the visible light output of the visible light source 102 may be controlled by the processor 107.

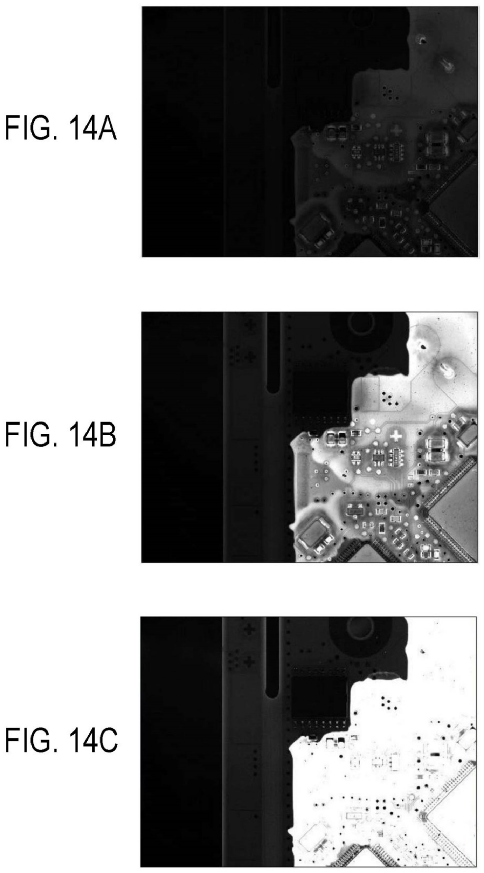

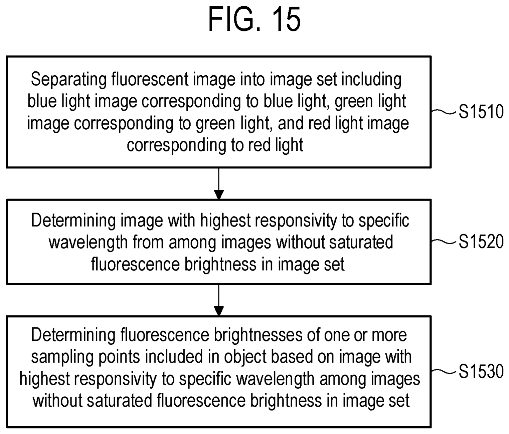

The image sensor 103 may obtain a fluorescent image of the object 105 irradiated with ultraviolet rays. For example, the image sensor 103 may have channels corresponding to red, green, and/or blue light bands, respectively. In this case, the image sensor 103 may obtain a red light image of the object 105 irradiated with ultraviolet rays through a red light channel. In addition, the image sensor 103 may obtain a green light image of the object 105 irradiated with ultraviolet rays through a green light channel. In addition, the image sensor 103 may obtain a blue light image of the object 105 irradiated with ultraviolet rays through a blue light channel. In an embodiment, the image sensor 103 may obtain a fluorescent image on the basis of the red light image, the green light image, and/or the blue light image. For example, the image sensor 103 may determine an R value (brightness in the red light band) of each pixel through the red light image, a G value (brightness in the green light band) of each pixel through the green light image, and a B value (brightness in the blue light band) of each pixel through the blue light image, and determine a color value of each pixel of the fluorescent image by combining the R, G, and/or B values of each pixel. In another embodiment, the image sensor 103 may obtain one of a red light image, a green light image, or a blue light image as a fluorescent image. This embodiment will be described in detail in FIGS. 14 and 15 later.

The image sensor 103 may obtain a color image of the object 105 captured under visible light. For example, the color image may include a plurality of background areas having different colors according to each of the plurality of backgrounds of the object 105.

The optical coherence tomography module 104 may measure the coating thickness of the object 105 through optical coherence tomography. The optical coherence tomography module 104 may include, for example, a laser light source and an interferometer sensor. Specifically, the optical coherence tomography module 104 may irradiate the object 105 with a laser beam, obtain an interference signal from the object irradiated with a laser beam, reconstruct a cross-sectional image from the interference signal, and determine a coating thickness based on the reconstructed cross-sectional image.

In the present disclosure, one or more processors 107 may be referred to as a processor 107. The expression "processor 107" may refer to a single processor or a set of processors, unless the context clearly indicates otherwise. In the present disclosure, one or more memories 106 may be referred to as a memory 106. The expression "memory 106" may refer to a single memory or a set of memories, unless the context clearly indicates otherwise. At least some of the components inside and outside the apparatus 100 may be interconnected via a bus, a general-purpose input/output (GPIO), a serial peripheral interface (SPI), or a mobile industry processor interface (MIPI), thereby exchanging data and/or signals.

The processor 107 according to an embodiment of the present disclosure may control at least one component of the apparatus 100 connected to the processor 107 by executing software (e.g., commands, programs, etc.). For example, the processor 107 may control the ultraviolet light source 101, the image sensor 103, and the memory 106 connected to the processor 107 by executing software (e.g., commands, programs, etc.). Furthermore, the processor 107 may perform various operations related to the present disclosure, such as calculations, processing, data generation, and processing. Furthermore, the processor 107 may load data from the memory 106 or store data therein. In the present disclosure, unless otherwise indicated by context, components of the apparatus 100 are controlled by the processor 107.

The memory 106 according to an embodiment of the present disclosure may store various data. Data stored in the memory 106 is data that is obtained, processed, or used by at least one component of the apparatus 100 and may include software (e.g., commands, programs, etc.). The memory 106 may include volatile and/or non-volatile memory. In the present disclosure, commands or programs are software stored in the memory 106, and may include an operating system for controlling the resources of the apparatus 106, applications, and/or middleware that provides various functions to the applications so that the applications may utilize the resources of the apparatus 100. In an embodiment, the memory 106 may store instructions that, when executed by the processor 107, cause the processor 107 to perform operations.

The memory 106 according to an embodiment of the present disclosure may store one or more correlation models. Here, one or more correlation models may output a coating thickness based on an input fluorescence brightness of the coated object. For example, the correlation model may be an artificial neural network-based machine learning model. In the present disclosure, the processor 107 may use data set A as input data and data set B as output data, using a machine learning algorithm, to build a correlation model that models the correlation between data sets A and B. An electronic device may derive data B from data A using the built correlation model. In an embodiment, the correlation model may be trained based on learning data including a correspondence between fluorescence brightness and coating thickness.

Furthermore, in an embodiment, the memory 106 may store a fluorescent image obtained through the image sensor 103 and/or an image of the object 105 captured under visible light. In an embodiment, the memory 106 may store a blue light image corresponding to the blue light band, a green light image corresponding to the green light band, and/or a red light image corresponding to the red light band, which are obtained from the fluorescent image. Furthermore, in an embodiment, the memory 106 may store obtained learning data. Furthermore, in an embodiment, the memory 106 may store a determined coating thickness of a target area.

Meanwhile, the memory 106 and the processor 107 may be integrated and expressed as a computing device 108. The computing device 108 according to various embodiments of the present disclosure may be various types of devices. For example, the computing device may be a portable communication device, a portable multimedia device, a wearable device, a home appliance device, or a device according to a combination of one or more of the aforementioned devices. The computing device 108 of the present disclosure is not limited to the devices described above, and may be a device embedded in the apparatus 100 or a device that collectively controls a plurality of apparatuses 100 or collectively controls an inspection apparatus and a production apparatus for each production line.

In an embodiment of the present disclosure, the computing device 108 may further include a communication circuit (not shown). The communication circuit may perform wireless or wired communication between the computing device 108 and other external apparatuses. For example, the communication circuit may perform wireless communication according to a scheme such as eMBB (enhanced Mobile Broadband), URLLC (Ultra Reliable Low-Latency Communications), MMTC (Massive Machine Type Communications), LTE (Long-Term Evolution), LTE-A (LTE Advance), NR (New Radio), UMTS (Universal Mobile Telecommunications System), GSM (Global System for Mobile communications), CDMA (Code Division Multiple Access), WCDMA (Wideband CDMA), WiBro (Wireless Broadband), Wi-Fi (Wireless Fidelity), Bluetooth, NFC (Near-Field Communication), GPS (Global Positioning System), or GNSS (Global Navigation Satellite System). For example, the communication circuit may perform wired communication according to a scheme such as a USB (Universal Serial Bus), an HDMI (High-Definition Multimedia Interface), RS-232 (Recommended Standard-232), or a POTS (Plain Old Telephone Service). In an embodiment, when the ultraviolet light source 101, the image sensor 103, and the inspection apparatus 100 are configured independently, the computing device 108 may communicate with the ultraviolet light source 101, the visible light source 102, the image sensor 103, and the optical coherence tomography module 104 through the communication circuit.

The apparatus 100 may further include a display 109 and an input device 110. For example, the input device 110 may be a device that receives data from an external source to be transmitted to at least one component of the apparatus 100. For example, the input device 110 may include a mouse, a keyboard, a touchpad, etc.

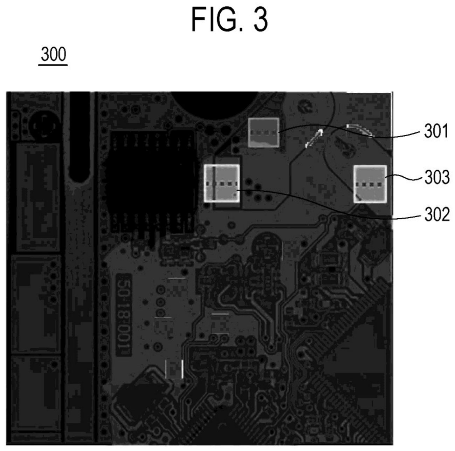

FIG. 3 is a diagram illustrating an object 105 and sampling points according to an embodiment of the present disclosure. The apparatus 100 may obtain a fluorescent image 300 of the object 105. Based on the fluorescent image 300, the apparatus 100 may obtain information indicating target areas 301, 302, and 303 from a user. The apparatus 100 may output the fluorescent image of the object 105 through the display 109. In addition, the apparatus 100 may obtain information indicating the target area 301, 302, and 303, which is input based on the output fluorescent image through the input device 110. For example, the apparatus 100 may receive an input of the target area 301, 302, and 303 as a rectangular area on the fluorescent image, which is a two-dimensional image. In another embodiment, the apparatus 100 may receive an input of the target area through the input device, based on a separate image of the object 105 obtained under visible light, rather than the fluorescent image.

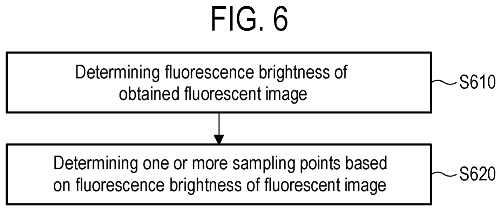

For example, one or more sampling points may be points included in the target area. The determination of one or more sampling points will be described later with reference to FIG. 6. In an embodiment, the apparatus 100 may determine a fluorescence brightness of one or more sampling points included in the object 105, based on the fluorescent image. Specifically, the apparatus 100 may determine the fluorescence brightness of a sampling point, based on the brightness of the pixel corresponding to the sampling point in the fluorescent image.

In an embodiment, the apparatus 100 may obtain coating thicknesses measured at one or more sampling points. For example, the apparatus 100 may directly measure the coating thicknesses at one or more sampling points. As another example, the apparatus 100 may receive information on the coating thicknesses measured at one or more sampling points from a separate measurement device. In an embodiment, the apparatus 100 may obtain the coating thicknesses corresponding to one or more sampling points through optical coherence tomography. That is, the apparatus 100 may directly measure the coating thicknesses at one or more sampling points through optical coherence tomography, or may receive information on the coating thicknesses measured at one or more sampling points through optical coherence tomography from a separate measurement device.

In an embodiment, the apparatus 100 may generate learning data including the fluorescence brightness and coating thickness of each of one or more sampling points. That is, the apparatus 100 may generate learning data corresponding to each of one or more sampling points. In other words, the number of generated learning data may be equal to the number of sampling points. The generated learning data may be used to train one or more correlation models.

In an embodiment, there may be a correlation model corresponding to each target area. In this case, a correlation model corresponding to the same target area may be trained based on the learning data corresponding to each target area. The correlation model trained in this way may be used to determine the coating thickness of the same target area. However, the present disclosure is not limited to this embodiment, and in other embodiments, a single correlation model may be trained using learning data for a plurality of target areas, or a plurality of correlation models may be trained using learning data for one target area. Alternatively, in an embodiment, a correlation model trained using data for one or more target areas may be used to determine the coating thickness of another target area. Alternatively, in an embodiment, a correlation model trained based on learning data corresponding to sampling points not included in the target area may be used to determine the coating thickness of the target area.

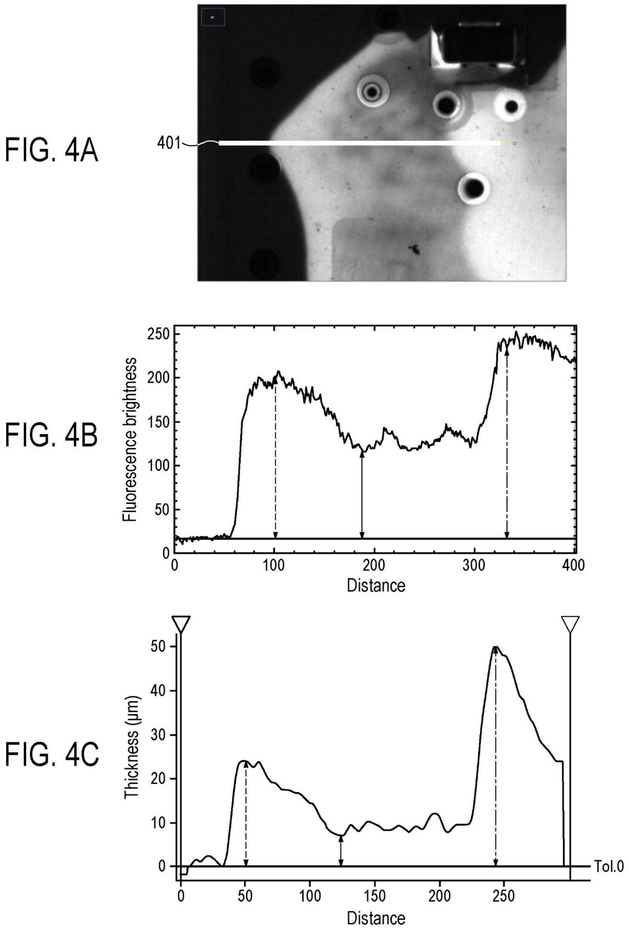

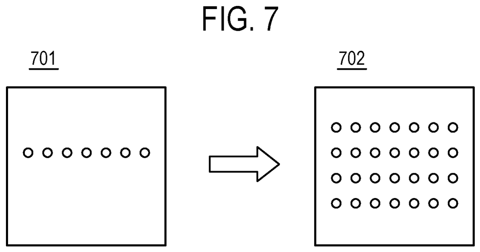

FIG. 4 is a diagram illustrating a correlation between fluorescence brightness and coating thickness of an object according to an embodiment of the present disclosure. FIG. 4A is a diagram illustrating at least a portion of a fluorescent image of an object 105. Here, the line 401 may be a line including one or more sampling points. In other words, one or more sampling points may be determined to be included in the line 401. In an embodiment, the apparatus 100 may receive an input of the line 401 from a user. Specifically, the apparatus 100 may output at least a portion of the fluorescent image of the object 105 through the display, and receive an input of the line 401 through an input device, based on at least the output portion of the fluorescent image. In an embodiment, the line 401 is not necessarily required to be a straight line and may be input in various shapes, such as a curve, circle, or square. Subsequently, the apparatus 100 may determine one or more sampling points included in the line 401. For example, one or more sampling points may be determined based on a predetermined sampling rate. A higher sampling rate may result in a greater number of sampling points being determined. The predetermined sampling rate may be set to a default value, and may be adjusted to be higher if the accuracy of the correlation model does not reach a specific level. Adjusting the sampling rate will be described in detail with reference to FIGS. 7 to 9 later.

In another embodiment, the apparatus 100 may determine one or more sampling points on its own, instead of receiving an input of the line 401 from the user. This embodiment will be described in detail with reference to FIG. 6 later.

FIG. 4B is a graph showing the fluorescence brightness at various sampling points. For example, the horizontal axis of the graph may represent the distance along the line 401. For example, the distance may be expressed in units of pixels. Furthermore, for example, the vertical axis of the graph may represent a fluorescence brightness value in the fluorescent image. For example, the fluorescence brightness value may be expressed within a range from 0 to 255.

FIG. 4C is a graph showing the coating thickness at various sampling points. For example, the horizontal axis of the graph may represent the distance along the line 401. In addition, for example, the vertical axis of the graph may represent the measured coating thickness. For example, the coating thickness may be expressed in units of *µ*m (micrometers).

Comparing FIG. 4B with FIG. 4C, it can be confirmed that the coating thickness is greater at points with higher fluorescence brightness. However, since the fluorescence brightness and the coating thickness do not have a linear relationship, learning the correlation is necessary by sampling at various brightness locations. However, the graphs represented in FIGS. 4B and 4C are merely exemplary graphs showing that a correlation between the fluorescence brightness and the coating thickness exists and that they are capable of being measured, and the represented values do not have quantitative meaning, so the present disclosure is not limited to this interpretation.

The apparatus 100 may train a correlation model on the basis of learning data of one or more sampling points, including fluorescence brightnesses corresponding to one or more sampling points represented in FIG. 4B and coating thicknesses corresponding to one or more sampling points represented in FIG. 4C.

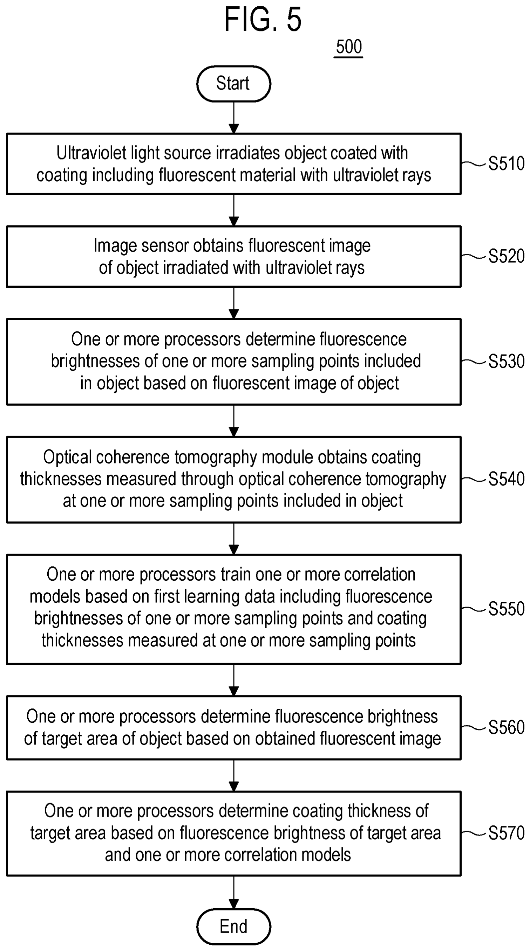

FIG. 5 is a flowchart illustrating a method according to an embodiment of the present disclosure. Referring to FIG. 5, the method 500 includes a step S510 in which an ultraviolet light source 101 irradiates an object 105, which is coated with a coating mixed with a fluorescent material, with ultraviolet rays, a step S520 in which an image sensor 103 obtains a fluorescent image of the object 105 irradiated with ultraviolet rays, a step S530 in which a processor 107 determines fluorescence brightnesses of one or more sampling points included in the object 105 on the basis of the fluorescent image of the object 105, a step S540 in which an optical coherence tomography module 104 obtains coating thicknesses measured through optical coherence tomography at one or more sampling points included in the object 105, a step S550 in which the processor 107 trains one or more correlation models on the basis of first learning data including the fluorescence brightnesses of one or more sampling points and the coating thicknesses measured at one or more sampling points, a step S560 in which the processor 107 determines a fluorescence brightness of a target area in at least a portion of an object 105 on the basis of the obtained fluorescent image, and a step S570 in which the processor 107 determines a coating thickness of the target area on the basis of the fluorescence brightness of the target area and one or more correlation models.

Here, the term "first learning data" is used to distinguish it from the second learning data, which will be described later. Furthermore, the apparatus 100 may determine the coating thickness of the target area, based on the fluorescence brightness of the target area, through one or more correlation models trained using the fluorescence brightnesses of one or more sampling points and the coating thicknesses measured at one or more sampling points. That is, since the coating thickness is measured through optical coherence tomography, etc., only at one or more sampling points, there is no need to measure the coating thickness at all points of the target area using optical coherence tomography, etc. Therefore, the time required to measure the coating thickness through optical coherence tomography, etc., may be shortened, and the coating thickness of the target area may be quickly and accurately determined only by obtaining the fluorescent image and analyzing the fluorescence brightness of the target area. Furthermore, in an embodiment, when the target area corresponds to the entire object 105, the apparatus 100 may determine a coating thickness of the entire object 105 by only measuring the coating thicknesses of some sampling points of the object 105 without receiving an input for the target area.

Specifically, the step S540 of the optical coherence tomography module 104 obtaining coating thicknesses measured at one or more sampling points included in the object 105 may include a step in which the optical coherence tomography module 104 irradiates the object 105 with laser light via a laser light source, a step in which the optical coherence tomography module 104 obtains an interference signal of the object irradiated with laser light using an interferometer sensor, and a step in which the optical coherence tomography module 104 reconstructs a cross-sectional image from the interference signal. Here, the laser light source and the interferometer sensor may be components included in the optical coherence tomography module 104. That is, the optical coherence tomography module 104 may obtain coating thicknesses measured at one or more sampling points from the reconstructed cross-sectional image.

FIG. 6 is a flowchart illustrating a step of determining a sampling point according to an embodiment of the present disclosure. The apparatus 100 may determine a fluorescence brightness of the obtained fluorescent image (S610). Furthermore, the apparatus 100 may determine one or more sampling points on the basis of the fluorescence brightness of the fluorescent image (S620).

In an embodiment, the apparatus 100 may determine one or more sampling points on the basis of the deviation between fluorescence brightnesses included in the learning data. The greater the deviation between fluorescence brightnesses included in the learning data, the higher the diversity of the learning data. Higher diversity in the learning data may indicate higher quality of the learning data. In other words, the greater the deviation between fluorescence brightnesses included in the learning data, the better the learning performance of the correlation model. Therefore, the apparatus 100 may determine one or more sampling points based on predetermined criteria in a direction in which the deviation between fluorescence brightnesses included in the learning data increases.

In an embodiment, the apparatus 100 may generate a plurality of candidate sampling point sets (e.g., a set of one or more sampling points included in a candidate line) included in at least a portion of the fluorescent image and determine a candidate sampling point set having the largest deviation between fluorescence brightnesses of one or more included sampling points, among the plurality of candidate sampling point sets. Then, the apparatus 100 may obtain measured coating thicknesses corresponding to the respective sampling points included in the determined candidate sampling point set. Subsequently, the apparatus 100 may train a correlation model on the basis of learning data corresponding to the sampling points included in the determined candidate sampling point set. In this case, the user does not need to directly input information about the sampling points (e.g., information indicating a line including the sampling points), and the learning performance of the correlation model may be improved compared to when the user inputs information about the sampling points.

In an embodiment, the apparatus 100 may obtain fluorescence brightnesses of at least some points of the fluorescent image, and determine a predetermined number of sampling points having the largest deviation between the fluorescence brightnesses respectively corresponding to the sampling points. Then, the apparatus 100 may obtain a measured coating thickness corresponding to each of the predetermined number of determined sampling points. Next, the apparatus 100 may train a correlation model on the basis of learning data corresponding to the predetermined number of determined sampling points. In this case, the user does not need to directly input information about the sampling points, and the learning performance of the correlation model may be improved compared to when the user inputs information about the sampling points.

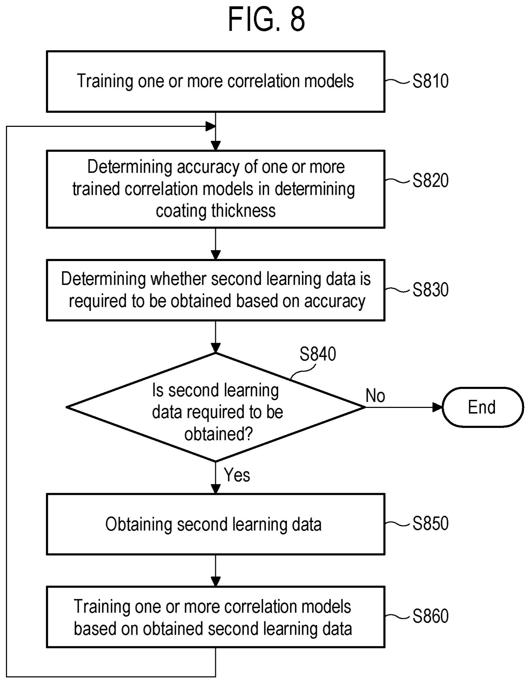

FIG. 7 is a diagram illustrating first learning data and second learning data according to an embodiment of the present disclosure. FIG. 8 is a flowchart illustrating a step of obtaining second learning data according to an embodiment of the present disclosure.

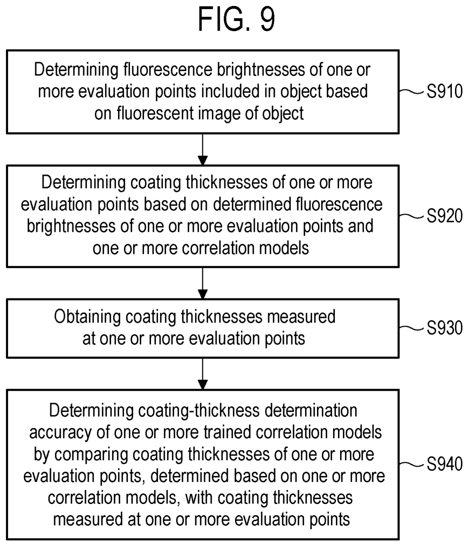

After training one or more correlation models (S810), the apparatus 100 may determine the accuracy of one or more learned correlation models in determining the coating thickness (S820). The operation in which the apparatus 100 determines the accuracy of one or more learned correlation models in determining the coating thickness will be described in detail with reference to FIG. 9 below.

Based on the accuracy, the apparatus 100 may determine whether second learning data is required to be obtained (S830). Specifically, the apparatus 100 may determine whether the accuracy is less than a predetermined reference. If the accuracy is less than the predetermined reference, the apparatus 100 may determine that the second learning data is required to be obtained.

In response to determining that the second learning data is required to be obtained (Yes in S840), the apparatus 100 may obtain second learning data (S850). Specifically, before determining that the second learning data is required to be obtained, the apparatus 100 may determine a first number of sampling points on the basis of a first sampling rate and obtain first learning data corresponding to the first number of sampling points. That is, in this case, the apparatus 100 may obtain a first number of pieces of first learning data. For example, there may be seven pieces of first learning data in at least a partial area 701 of the object 105. Thereafter, in response to determining that the second learning data is required to be obtained, the apparatus 100 may determine a second number of sampling points on the basis of a second sampling rate and obtain second learning data corresponding to the second number of sampling points. That is, in this case, the apparatus 100 may obtain a second number of pieces of second learning data. For example, there may be 28 pieces of second learning data in at least a partial area 702 of the object 105.

In an embodiment, the first learning data may be included in the second learning data. That is, the apparatus 100 may obtain second learning data by adding learning data including the fluorescence brightnesses of additional sampling points included in the object 105 and the coating thicknesses measured at the additional sampling points to the first learning data.

In another embodiment, the apparatus 100 may obtain second learning data separate from the first learning data. That is, the apparatus 100 may obtain second learning data that does not overlap all of the first learning data. In this case, some of the first learning data may overlap the second learning data, or the first and second learning data may not overlap each other.

In an embodiment, the first and second sampling rates may be predetermined. For example, the second sampling rate may be configured to a value four times the first sampling rate, i.e., the initial sampling rate. This multiple is merely an arbitrarily determined value for illustrative purposes, and the present disclosure is not limited thereto. However, at least the second sampling rate may be greater than the first sampling rate. Accordingly, the second number is also larger than the first number. In other words, the number of pieces of newly obtained second learning data is larger than the number of pieces of previously obtained first learning data.

In another embodiment, the first sampling rate, i.e., the initial sampling rate, may not be predetermined and may be determined through user input. In another embodiment, if the coating-thickness determination accuracy of the correlation model trained through the first learning data obtained based on the first sampling rate falls below a predetermined reference, the second learning data may be obtained based on a second sampling rate input by the user. In this case, the apparatus 100 may receive information about the second sampling rate from the user in advance of obtaining the first learning data, or may receive information about the second sampling rate from the user in response to the coating-thickness determination accuracy of the correlation model trained through the first learning data falling below a predetermined reference.

The apparatus 100 may train one or more correlation models on the basis of the obtained second learning data (S860). Therefore, the correlation model newly or cumulatively trained based on a larger amount of second learning data than the first learning data may have better performance. That is, the correlation model learned based on the second learning data may have a higher thickness determination accuracy.

In another embodiment, the apparatus 100 may further evaluate the thickness determination accuracy of the correlation model trained based on the second learning data. In other words, the apparatus 100 may repeatedly evaluate the thickness determination accuracy of the trained correlation model. For example, the sampling rate, the number of sampling points, and the number of learning data may increase with this repetition. Furthermore, the apparatus 100 may repeat the evaluation of the thickness determination accuracy of the trained correlation model until the thickness determination accuracy reaches a predetermined reference or more.

FIG. 9 is a diagram illustrating a step of determining the accuracy of a correlation model in determining a coating thickness according to an embodiment of the present disclosure. The apparatus 100 may determine fluorescence brightnesses of one or more evaluation points included in the object 105 on the basis of a fluorescent image of the object (S910). Here, one or more evaluation points may be determined as arbitrary points included in the object 105, and may not be sampling points corresponding to the learning data used to train the correlation model. For example, the apparatus 100 may determine one or more evaluation points within the object 105. In an embodiment, the evaluation points may be randomly selected points. Alternatively, in an embodiment, for more accurate evaluation, the apparatus 100 may determine one or more evaluation points on the basis of the fluorescence brightness of the fluorescent image. For example, the apparatus 100 may determine one or more evaluation points on the basis of the deviation in fluorescence brightness of one or more evaluation points. Specifically, the apparatus 100 may determine one or more evaluation points such that the deviation in fluorescence brightness of one or more evaluation points is greater than or equal to a predetermined reference.

The apparatus 100 may determine coating thicknesses of one or more evaluation points on the basis of the determined fluorescence brightnesses of the one or more evaluation points and one or more correlation models (S920). Specifically, the apparatus 100 may obtain coating thicknesses output in response to input values of the fluorescence brightnesses of one or more evaluation points to the trained correlation model. That is, the apparatus 100 may determine the coating thicknesses output from the trained correlation model as the coating thicknesses of one or more evaluation points.

The apparatus 100 may obtain coating thicknesses measured at one or more evaluation points (S930). Here, the apparatus 100 may obtain coating thicknesses measured at one or more evaluation points, for example, through optical coherence tomography.

The apparatus 100 may compare the coating thicknesses of one or more evaluation points, determined based on one or more correlation models, with the coating thicknesses measured at one or more evaluation points, and determine the coating-thickness determination accuracy of one or more trained correlation models (S940). In an embodiment, the apparatus 100 may compare the coating thicknesses of one or more evaluation points determined in S920 with the coating thicknesses measured at one or more evaluation points obtained in S930.

In an embodiment, the apparatus 100 may determine the ratio of the number of evaluation points where the coating thickness determined in S920 substantially matches the coating thickness obtained through measurement in S930 to the number of one or more evaluation points as the coating-thickness determination accuracy of one or more trained correlation models. For example, the accuracy may be determined in percentage (%). Here, for example, the substantially matching evaluation point may refer to an evaluation point where the difference between the coating thickness determined in S920 and the coating thickness obtained through measurement in S930 is less than a predetermined value. As another example, the substantially matching evaluation point may refer to a point where the error rate of the coating thickness determined in S920 relative to the coating thickness obtained through measurement in S930 falls within a predetermined range.

In another embodiment, the apparatus 100 may determine, as the coating-thickness determination accuracy of one or more trained correlation models, a value corresponding to the root mean square deviation (RMSD) of the error of the coating thickness determined in S920 relative to the coating thickness obtained through measurement in S930 for each of one or more evaluation points. For example, since a smaller error indicates higher accuracy, the apparatus 100 may determine the coating-thickness determination accuracy of one or more trained correlation models, which is inversely proportional to the root mean square deviation of the error.

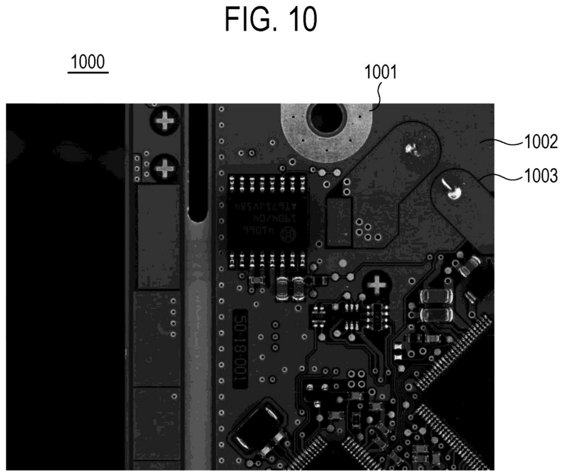

FIG. 10 is a diagram illustrating the plurality of background areas obtained by dividing an object 105 according to an embodiment of the present disclosure. FIG. 10 is a diagram illustrating a color image 1000 of an object captured under visible light, which is obtained by the apparatus 100. The apparatus 100 may control the visible light source 101 to irradiate an object with visible light, and control an image sensor 103 to obtain a color image 1000 of the object captured under visible light. Subsequently, the apparatus 100 may divide the object into a plurality of background areas on the basis of the color image 1000 of the object.

As confirmed in the color image 1000 of the object, the object 105 may be divided into a metal area 1001, an area 1002 having a copper foil under a solder resist (SR), and an area 1003 without a copper foil under the solder resist. That is, for example, the object 105 may be divided into a plurality of background areas depending on the material. For example, the metal area 1001 may be bright silver-white or brass-colored, the solder resist area 1002 with a copper foil underneath may be bright green, and the solder resist area 1003 without a copper foil underneath may be dark green. The color of the substrate is determined by the color of the solder resist, and the lightness and darkness of the color may depend on the presence or absence of a copper circuit layer underneath. Therefore, the apparatus 100 may divide the object into a plurality of background areas on the basis of the color identified for each area of the color image 1000 of the object.

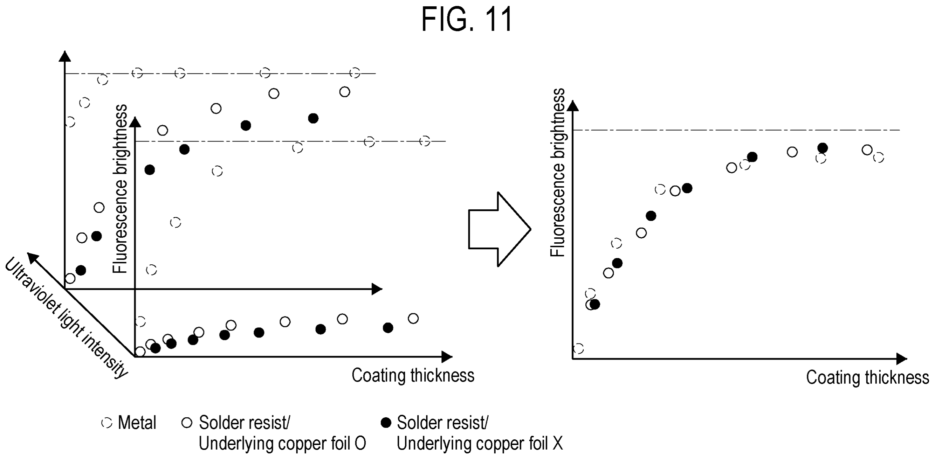

FIG. 11 is a diagram illustrating an example of compensating for the fluorescence brightness according to the background area. According to the plurality of graphs shown on the left side of FIG. 11, as the coating thickness and ultraviolet ray brightness increase, the fluorescence brightness also increases. However, the fluorescence brightness and the extent of the increase in fluorescence brightness vary depending on the type of background area (the metal, the solder resist with a copper foil underneath, and the solder resist without a copper foil underneath). For example, under the same coating thickness and ultraviolet ray brightness, the fluorescence brightness may decrease in the order of a point where the background is metal, a point where the background is a solder resist with a copper foil underneath, and a point where the background is a solder resist without a copper foil underneath. This is due to the fact that the object's background may affect the fluorescence brightness.

The apparatus 100 may compensate for the fluorescence brightness depending on the type of background area in order to minimize the variation in the influence of the object's background on the fluorescence brightness. That is, the apparatus 100 may compensate for the fluorescence brightnesses of one or more sampling points on the basis of a specific background area among a plurality of background areas corresponding to the one or more sampling points. In addition, the apparatus 100 may correct the fluorescence brightness of a target area on the basis of a specific background area among a plurality of background areas corresponding to the target area. For example, compensation for the fluorescence brightness may be performed using a compensation equation that includes at least the fluorescence brightness and the type of background as variables. For example, compensation for the fluorescence brightness may include scaling for adjusting a scaling factor of the fluorescence brightness. Here, the compensation equation for compensating for the fluorescence brightness may be predetermined before performing thickness measurement of the object. After compensation, the fluorescence brightnesses corresponding to various types of background areas may change as shown in the graph on the right side of FIG. 11. That is, the fluorescence brightness data on the right side of FIG. 11 may indicate fluorescence brightness data with the background's influence on fluorescence brightness removed.

In an embodiment, the first learning data used to train one or more correlation models may include the compensated fluorescence brightnesses of one or more sampling points. In addition, the apparatus 100 may determine a coating thickness of the target area on the basis of the compensated fluorescence brightness of the target area and one or more correlation models. In this case, since compensation is performed to remove the influence of the background on the fluorescence brightness, the coating thickness may be determined on the basis of a single correlation model even for the fluorescence brightness of the target area with a different background. That is, according to this embodiment, instead of training a plurality of correlation models respectively corresponding to a plurality of backgrounds, a single correlation model may be trained, and the coating thickness of the target area may be determined on the basis of this single correlation model.

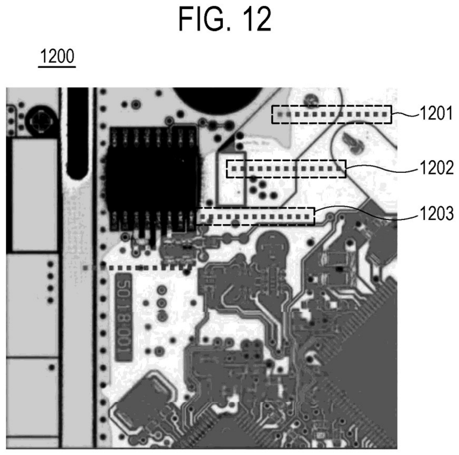

FIG. 12 is a diagram illustrating sampling points corresponding to a specific background area among the plurality of background areas according to an embodiment of the present disclosure. One or more sampling points 1201, 1202, and 1203 may include points included in a specific background area among a plurality of background areas. For example, one or more sampling points 1201, 1202, and 1203 may include points included in a solder resist area with a copper foil underneath. In this case, the apparatus 100 may train a correlation model corresponding to a specific background area among the plurality of background areas on the basis of learning data corresponding to one or more sampling points 1201, 1202, and 1203 included in the specific background area among the plurality of background areas. The trained correlation model corresponding to the specific background area among the plurality of background areas may be used to determine the coating thickness of a target area included in the specific background area among the plurality of background areas.

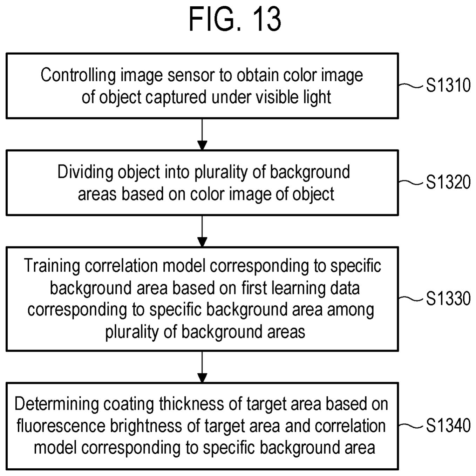

FIG. 13 is a flowchart illustrating a step of training a correlation model corresponding to a specific background area among a plurality of background areas and determining a coating thickness of a target area on the basis of the correlation model corresponding to the specific background area among the plurality of background areas, according to an embodiment of the present disclosure. The apparatus 100 may control the image sensor 103 to obtain an image of an object captured under visible light (S1310). Based on the object image, the apparatus 100 may divide the object into a plurality of background areas (S1320).

In an embodiment, the apparatus 100 may divide the object into a plurality of background areas on the basis of the colors of the image of the object captured under visible light. As described in FIG. 10, the plurality of background areas may have colors corresponding to materials, respectively. Therefore, in an embodiment, the apparatus 100 may divide the object into a plurality of background areas whose colors are determined to be similar according to predetermined criteria, based on an image of the object captured under visible light.

Alternatively, in another embodiment, the apparatus 100 may determine, based on an image of the object captured under visible light, an area in the object determined to be similar in color to each of the plurality of background areas according to predetermined criteria. Subsequently, the apparatus 100 may divide the object into a plurality of background areas on the basis of the areas respectively determined to be similar in color to the plurality of background areas. In this case, for example, the apparatus 100 may determine an area of the object that is determined to be similar to bright green, an area determined to be similar to dark green, and an area determined to be similar to black. Furthermore, the apparatus 100 may divide the object into a metal area, a solder resist area without a copper foil, and a solder resist area with a copper foil on the basis of the determined areas.

The apparatus 100 may train a correlation model corresponding to a specific background area on the basis of first learning data corresponding to the specific background area among the plurality of background areas (S1330). For example, one or more correlation models may include a correlation model corresponding to the metal area, a correlation model corresponding to the solder resist area without a copper foil, and a correlation model corresponding to the solder resist area with a copper foil. In this case, the apparatus 100 may determine one or more sampling points corresponding to the solder resist area without a copper foil. Next, the apparatus 100 may obtain learning data including the fluorescence brightnesses and measured coating thicknesses of one or more sampling points corresponding to the solder resist area without a copper foil. Subsequently, the apparatus 100 may train a correlation model corresponding to the solder resist area without a copper foil on the basis of the learning data including the fluorescence brightnesses and measured coating thicknesses of one or more sampling points corresponding to the solder resist area without a copper foil.

In an embodiment, the apparatus 100 may determine one or more sampling points on the basis of the distance from the boundary between a specific background area and another background area among the plurality of background areas. For example, the deviation in fluorescence brightness may be greater in the edge area around the boundary between a specific background area and another background area among the plurality of background areas. That is, as the distance of a learning data set from the boundary between a specific background area and another background area among the plurality of background areas approaches zero, the deviation in fluorescence brightness of the learning data may increase. Therefore, the apparatus 100 may determine one or more sampling points within the edge area of a specific background area. Here, the edge area may be an area where the distance from the boundary between the specific background area and another background area among the plurality of background areas is less than a predetermined threshold. Furthermore, for example, the apparatus 100 may determine, in an edge area of a specific background area where the distance from the boundary between the specific background area and another background area among the plurality of background areas is less than a predetermined threshold, one or more sampling points such that the deviation in the distance from the boundary between the specific background area and another background area among the plurality of background areas is equal to or greater than a predetermined reference. In an embodiment, the apparatus 100 may determine one or more sampling points located on a normal to the boundary between the specific background area and another background area among the plurality of background areas from a point on the boundary between the specific background area and another background area among the plurality of background areas. In the various embodiments described above, the user does not need to directly input information about the sampling points, and the learning performance of the correlation model may be improved compared to when the user inputs information about the sampling points.

The apparatus 100 may determine the coating thickness of a target area on the basis of the fluorescence brightness of the target area and a correlation model corresponding to a specific background area (S1340). Here, the target area may be included in the specific background area. Furthermore, for example, the apparatus 100 may determine the coating thickness of the target area on the basis of the fluorescence brightness of the target area included in the solder resist area without a copper foil and a learning model corresponding to the solder resist area without a copper foil. Although the above example illustrates a solder resist area without a copper foil among the plurality of background areas, a correlation model corresponding to each area may be trained in the same manner for the metal area or the solder resist area with a copper foil. Furthermore, the coating thickness of the target area within each of the metal area or the solder resist area with a copper foil on the basis of the fluorescence brightness of the target area within each area and the correlation model corresponding to each area.

In an embodiment, the apparatus 100 may determine a coating-thickness determination accuracy of a correlation model corresponding to a specific background area among the plurality of background areas, obtain, based on the accuracy, second learning data including fluorescence brightnesses of additional sampling points included in the specific background area of the object and coating thicknesses measured at the additional sampling points, and further train the correlation models corresponding to the specific background area on the basis of the second learning data.

In an embodiment, the apparatus 100 may determine fluorescence brightnesses of one or more evaluation points included in a specific background area of the object on the basis of the fluorescent image of the object. In addition, the apparatus 100 may determine coating thicknesses of one or more evaluation points on the basis of the fluorescence brightnesses of one or more evaluation points and the correlation model corresponding to the specific background area. In addition, the apparatus 100 may obtain coating thicknesses measured at one or more evaluation points, and determine the coating-thickness determination accuracy of the trained correlation model corresponding to the specific background area by comparing the coating thicknesses of one or more evaluation points determined on the basis of the correlation model corresponding to the specific background area with the coating thicknesses measured at one or more evaluation points.

FIG. 14 is a diagram showing images in red, green, and blue light bands separated from a fluorescent image captured under ultraviolet rays according to an embodiment of the present disclosure. FIG. 14A may be a red light image, FIG. 14B may be a green light image, and FIG. 14C may be a blue light image. For example, a fluorescent material irradiated with ultraviolet rays may emit light in the blue light band. Accordingly, the blue light image, the green light image, and the red light image may have high responsivity to wavelengths corresponding to blue light, in that order. Meanwhile, depending on the responsivity, the brightness of at least a portion of one of the red light image, the green light image, and the blue light image may be saturated.

In an embodiment, the apparatus 100 may obtain an image set including the blue light image, the green light image, and the red light image. In an embodiment, the apparatus 100 may determine the fluorescence brightnesses of one or more sampling points included in the object on the basis of the image set and the responsivity of each image included in the image set to a specific wavelength. Here, the specific wavelength may be a wavelength corresponding to blue light. This will be described in detail with reference to FIG. 15 below.

FIG. 15 is a flowchart illustrating a step of determining the fluorescence brightnesses of one or more sampling points included in an object on the basis of an image set and the responsivity of each image included in the image set to a specific wavelength, according to an embodiment of the present disclosure. Referring to FIG. 15, the apparatus 100 may control the image sensor 103 to separate the fluorescent image into an image set including a blue light image corresponding to blue light, a green light image corresponding to green light, and a red light image corresponding to red light (S1510). For example, the apparatus 100 may obtain a red light image as a fluorescent image obtained through the red light channel of the image sensor 103, a green light image as a fluorescent image obtained through the green light channel of the image sensor 103, and a blue light image as a fluorescent image obtained through the blue light channel of the image sensor 103.

The apparatus 100 may determine an image with the highest responsivity to a specific wavelength from among the images whose fluorescence brightnesses are not saturated in the image set (S1520). Specifically, the apparatus 100 may determine whether there is a portion whose fluorescence brightness is saturated in each image included in the image set. That is, the apparatus 100 may determine an image that does not have a portion whose fluorescence brightness is saturated from the images included in the image set. Subsequently, the apparatus 100 may determine an image with the highest responsivity to a specific wavelength from among the images without saturated fluorescence brightness. The image determined as described above may be an image in which the fluorescence brightness is not saturated and the fluorescence brightness has a high variability (i.e., a large deviation between fluorescence brightnesses).

The apparatus 100 may determine the fluorescence brightnesses of one or more sampling points included in the object on the basis of the image with the highest responsivity to a specific wavelength among the images without saturated fluorescence brightness in the image set (S1530). Specifically, the apparatus 100 may obtain the fluorescence brightnesses of one or more sampling points on the basis of the image with the highest responsivity to a specific wavelength among the images without saturated fluorescence brightness, which are determined according to the above-described method, in the image set. Furthermore, the apparatus 100 may train one or more correlation models on the basis of learning data including the fluorescence brightnesses of one or more sampling points obtained as described above and the coating thicknesses measured at one or more sampling points. Furthermore, the apparatus 100 may determine the fluorescence brightness of a target area of the object on the basis of the image with the highest responsivity to a specific wavelength among the images without saturated fluorescence brightness in the image set, and may determine the coating thickness of the target area on the basis of the fluorescence brightness of the target area and one or more correlation models. Therefore, the apparatus 100 may obtain learning data on the basis of the determined image in which the fluorescence brightness is not saturated and the fluorescence brightness has a high variability, and train one or more correlation models on the basis of the obtained learning data, thereby improving the learning performance of the correlation model.

In the flowcharts of the present disclosure, the steps of the method or algorithm have been described in a sequential order. However, in addition to being performed sequentially, the steps may be performed in any order in which the steps may be randomly combined. The description of the flowcharts in the present disclosure neither excludes making changes or modifications to the method or algorithm, nor implies that a certain step is necessary or desirable. In an embodiment, at least some steps may be performed in parallel, iteratively, or heuristically. In another embodiment, at least some steps may be omitted, or other steps may be added.

Embodiments according to the present disclosure may be implemented as software on a machine-readable storage medium. The software may be software for implementing the embodiments described in the present disclosure. The software may be inferred by programmers in the technical field to which the present disclosure pertains from the embodiments described in the present disclosure. For example, the software may be a program containing machine-readable commands (e.g., instructions, code, or code segments). The machine may be a device capable of operating based on commands called from the storage medium, and may be, for example, a computer. In an embodiment, the machine may be a computing device according to the embodiments described in the present disclosure. In an embodiment, the machine's processor may execute the called commands to cause the machine's components to perform functions corresponding to these commands. The storage medium may refer to any type of recording medium that stores machine-readable data. The storage medium may include, for example, ROM, RAM, CD-ROM, a magnetic tape, a floppy disk, an optical data storage device, etc. In an embodiment, the storage medium may be implemented in a distributed form, such as within computer systems connected over a network. In this case, the software may be distributed, stored, and executed in the computer systems and executed. In another embodiment, the storage medium may be a non-transitory storage medium. The non-transitory storage medium refers to a tangible medium that exists, irrespective of whether data is stored semi-permanently or temporarily, and does not include a transitory propagating signal.

Although the technical idea according to the present disclosure has been described with reference to the above embodiments, the technical spirit according to the present disclosure encompasses various substitutions, modifications, and changes that may be made without departing the scope understandable to those skilled in the art to which the present disclosure pertains. Furthermore, it is understood that such substitutions, modifications, and changes may fall within the scope of the appended claims.

## Claims

1. An apparatus comprising:
an ultraviolet light source;
an image sensor;
an optical coherence tomography (OCT) module;
one or more memories configured to store one or more correlation models, the one or more correlation models outputting a coating thickness based on an input fluorescence brightness; and
one or more processors communicatively connected to the ultraviolet light source, the image sensor, the optical coherence tomography module, and the one or more memories,
wherein the one or more processors are configured to:
control the ultraviolet light source to irradiate an object, which is coated with a coating comprising a fluorescent material, with ultraviolet rays;
control the image sensor to obtain a fluorescent image of the object irradiated with the ultraviolet rays;
determine fluorescence brightnesses of one or more sampling points included in the object on the basis of the fluorescent image;
control the optical coherence tomography module to obtain coating thicknesses measured through optical coherence tomography at the one or more sampling points;
train the one or more correlation models on the basis of first learning data comprising the fluorescence brightnesses of the one or more sampling points and the coating thicknesses measured at the one or more sampling points;
determine a fluorescence brightness of a target area of the object on the basis of the fluorescent image; and
determine a coating thickness of the target area on the basis of the fluorescence brightness of the target area and the one or more correlation models.

2. The apparatus of claim 1, wherein the one or more processors are configured to determine the one or more sampling points on the basis of a fluorescence brightness of the obtained fluorescent image.

3. The apparatus of claim 2, wherein the one or more processors are configured to determine the one or more sampling points on the basis of deviation between the fluorescence brightnesses included in the first learning data.

4. The apparatus of claim 1, wherein the one or more processors are configured to:
determine an accuracy of the one or more trained correlation models in determining the coating thickness;
obtain, based on the accuracy, second learning data comprising fluorescence brightnesses of additional sampling points included in the object and coating thicknesses measured at the additional sampling points; and
further train the one or more correlation models on the basis of the second learning data.

5. The apparatus of claim 4, wherein the one or more processors are configured to:
determine fluorescence brightnesses of one or more evaluation points included in the object on the basis of the fluorescent image of the object;
determine coating thicknesses of the one or more evaluation points on the basis of the fluorescence brightnesses of the one or more evaluation points and the one or more correlation models;
obtain coating thicknesses measured at the one or more evaluation points; and
determine the accuracy of the one or more trained correlation models in determining the coating thicknesses by comparing the coating thicknesses of the one or more evaluation points determined on the basis of the one or more correlation models with the coating thicknesses measured at the one or more evaluation points.

6. The apparatus of claim 1, further comprising a visible light source,
wherein the one or more processors are configured to:
control the visible light source to irradiate the object with visible light;
control the image sensor to obtain a color image of the object captured under visible light;
divide the object into a plurality of background areas on the basis of the color image of the object; and
train a correlation model corresponding to a specific background area among the plurality of background areas on the basis of the first learning data, and
wherein the specific background area comprises the target area.

7. The apparatus of claim 6, wherein the one or more processors are configured to determine the coating thickness of the target area on the basis of the fluorescence brightness of the target area and the correlation model corresponding to the specific background area.

8. The apparatus of claim 6, wherein the one or more processors are configured to determine one or more sampling points included in an edge area of the specific background area, and
wherein the edge area is an area where a distance from a boundary between the specific background area and another background area among the plurality of background areas is less than a predetermined threshold.

9. The apparatus of claim 1, further comprising a visible light source,
wherein the one or more processors are configured to:
control the visible light source to irradiate the object with visible light;
control the image sensor to obtain a color image of the object captured under visible light;
divide the object into a plurality of background areas on the basis of the color image of the object; and
compensate for the fluorescence brightnesses of the one or more sampling points on the basis of a specific background area among the plurality of background areas corresponding to the one or more sampling points, and
wherein the first learning data comprises the compensated fluorescence brightnesses of the one or more sampling points.

10. The apparatus of claim 9, wherein the one or more processors are configured to:
compensate for the fluorescence brightness of the target area on the basis of a specific background area among the plurality of background areas corresponding to the target area; and
determine the coating thickness of the target area on the basis of the compensated fluorescence brightness of the target area and the one or more correlation models.

11. The apparatus of claim 1, wherein the one or more processors are configured to:
separate the fluorescent image into an image set comprising a blue light image corresponding to a blue light band, a green light image corresponding to a green light band, and a red light image corresponding to a red light band; and
determine the fluorescence brightnesses of the one or more sampling points included in the object on the basis of the image set and a responsivity of each image included in the image set to a specific wavelength.

12. The apparatus of claim 11, wherein the one or more processors are configured to determine the fluorescence brightnesses of the one or more sampling points included in the object on the basis of an image with a highest responsivity to a specific wavelength among images whose fluorescence brightnesses are not saturated in the image set.

13. A method performed by an apparatus, the method comprising:
irradiating, by an ultraviolet light source, an object coated with a coating comprising a fluorescent material with ultraviolet rays;
obtaining, by an image sensor, a fluorescent image of the object irradiated with the ultraviolet rays;
determining, by one or more processors, fluorescence brightnesses of one or more sampling points included in the object on the basis of the fluorescent image of the object;
obtaining, by an optical coherence tomography module, coating thicknesses measured through optical coherence tomography at the one or more sampling points included in the object;
training, by the one or more processors, one or more correlation models on the basis of first learning data comprising the fluorescence brightnesses of the one or more sampling points and the coating thicknesses measured at the one or more sampling points, the one or more correlation models outputting a coating thickness based on an input fluorescence brightness;
determining, by the one or more processors, a fluorescence brightness of a target area of the object on the basis of the fluorescent image; and
determining, by the one or more processors, a coating thickness of the target area on the basis of the fluorescence brightness of the target area and the one or more correlation models.

14. The method of claim 13, further comprising
determining, by the one or more processors, the one or more sampling points on the basis of a fluorescence brightness of the obtained fluorescent image.

15. The method of claim 14, wherein the determining, by the one or more processors, the one or more sampling points on the basis of the fluorescence brightness in some points of the obtained fluorescent image comprises:
determining, by the one or more processors, the one or more sampling points on the basis of deviation between the fluorescence brightnesses included in the first learning data.

16. The method of claim 13, further comprising:
determining, by the one or more processors, an accuracy of the one or more trained correlation models in determining the coating thickness;
obtaining, by the one or more processors, based on the accuracy, second learning data comprising fluorescence brightnesses of additional sampling points included in the object and coating thicknesses measured at the additional sampling points; and
further training, by the one or more processors, the one or more correlation models on the basis of the second learning data.

17. The method of claim 13, further comprising:
irradiating, by a visible light source, the object with visible light; and
obtaining, by the image sensor, a color image of the object captured under visible light,
wherein the training, by the one or more processors, the one or more correlation models on the basis of the first learning data comprises:
dividing, by the one or more processors, the object into a plurality of background areas on the basis of the color image of the object; and
training, by the one or more processors, a correlation model corresponding to a specific background area among the plurality of background areas on the basis of the first learning data, and
wherein the specific background area comprises the target area.

18. The method of claim 17, wherein the determining, by the one or more processors, the coating thickness of the target area on the basis of the fluorescence brightness of the target area and the one or more correlation models comprises:
determining, by the one or more processors, the coating thickness of the target area on the basis of the fluorescence brightness of the target area and a correlation model corresponding to the specific background area.

19. The method of claim 13, further comprising
separating, by the one or more processors, the fluorescent image into an image set comprising a blue light image corresponding to a blue light band, a green light image corresponding to a green light band, and a red light image corresponding to a red light band,
wherein the determining, by the one or more processors, the fluorescence brightnesses of the one or more sampling points included in the object on the basis of the fluorescent image of the object comprises:
determining, by the one or more processors, the fluorescence brightnesses of the one or more sampling points included in the object on the basis of the image set and a responsivity of each image included in the image set to a specific wavelength.

20. A non-transitory computer-readable recording medium having recorded thereon instructions that, when executed by one or more processors, cause the one or more processors to perform operations,
wherein the instructions are configured to cause the one or more processors to:
control an ultraviolet light source to irradiate an object, which is coated with a coating comprising a fluorescent material, with ultraviolet rays;
control an image sensor to obtain a fluorescent image of the object irradiated with the ultraviolet rays;
determine fluorescence brightnesses of one or more sampling points included in the object on the basis of the fluorescent image;
control an optical coherence tomography module to obtain coating thicknesses measured through optical coherence tomography at the one or more sampling points;
train one or more correlation models on the basis of first learning data comprising the fluorescence brightnesses of the one or more sampling points and the coating thicknesses measured at the one or more sampling points, the one or more correlation models outputting a coating thickness based on an input fluorescence brightness;
determine a fluorescence brightness of a target area of the object on the basis of the fluorescent image; and
determine a coating thickness of the target area on the basis of the fluorescence brightness of the target area and the one or more correlation models.
